# DEMANDE DE BREVET EUROPEEN

(11) **EP 1 320 172 A1**
(43) Date de publication de la demande: **18.06.2003**
(21) Numéro de dépôt: 02027822.2
(22) Date de dépôt: 12.12.2002
(51) Int. Cl.: H02K 5/24, F04D 29/66, B60H 1/00

(54) **Bague de maintien et de découplage du moteur électrique dans son support et procédé d'assemblage**

(30) Priorité: 17.12.2001 FR 0116337
(71) Demandeur: VALEO CLIMATISATION, 78321 La Verrière (FR)
(72) Inventeur: Majchrzak, Jean-Pierre, 78160 Marly le Roi (FR)

(57) **Abrégé**

L'invention concerne une bague de maintien et de découplage (20) pour moteur électrique (21) de ventilateur, incorporé dans un boîtier de ventilation chauffage et/ou climatisation automobile, dans un support moteur (23) du type comportant une paroi (22) délimitant une chambre destinée à loger un moteur électrique par l'intermédiaire d'un dispositif de maintien du moteur dans la chambre et comprenant des moyens d'isolation dudit moteur par interposition d'éléments amortisseurs. La bague de maintien et de découplage est constituée par des coquilles (1a , 1b) entourant le moteur et supportant les moyens de découplage (6a - 6d).

## Description

L'invention concerne un dispositif et un procédé de fixation élastique amortissant les vibrations pour un moteur électrique à l'intérieur d'un boîtier, moteur destiné à entraîner en rotation, par exemple, une roue de ventilateur fixée sur son arbre de rotor afin de constituer un groupe moto-ventilateur pour appareil de ventilation, chauffage et/ou climatisation de véhicule automobile.

Elle concerne plus particulièrement un dispositif de fixation comprenant une bague montée sur l'anneau d'un moteur électrique, au moins un élément d'adaptation positionné sur le contour de cette bague afin d'assurer le maintien en position et des organes amortisseurs disposés en périphérie pour assurer le découplage de l'ensemble ainsi constitué avec le support moteur.

Afin de découpler les vibrations et prévenir la création de bruits dans un boîtier ou à l'intérieur d'un véhicule, il est connu d'interposer des éléments amortisseurs entre l'anneau d'un moteur électrique et un support de ce dernier. Un tel dispositif est enseigné par le brevet européen EP 0 800 000 B1.

Le brevet européen EP 0 848 477 B1 enseigne un dispositif de fixation pour lequel le moteur électrique est supporté indirectement par une pièce d'adaptation servant de logement d'emmanchement direct du moteur électrique, laquelle pièce comprend des éléments intercalaires d'insonorisation dans une position axiale qui, après assemblage, viennent assurer le maintien du moteur électrique dans le support moteur.

Un dispositif de ce type comporte plusieurs inconvénients. La pièce d'adaptation est adaptée au diamètre extérieur du moteur électrique, les pièces intermédiaires doivent assurer le maintien axial entre la pièce d'adaptation et le support moteur et le montage nécessite la mise en place de plusieurs pièces et un assemblage long et délicat. De plus, en phase de montage, la bague est au préalable assemblée dans le support. L'assemblage du moteur dans un second temps nécessite la mise en place d'un contre-effort afin d'éviter les déformations du support et/ou des éléments amortisseurs. Enfin, un tel procédé de montage entraîne de nombreux rebuts dus à des problèmes de qualité engendrés par la détérioration des éléments amortisseurs.

La présente invention remédie à ces inconvénients. Elle propose un dispositif de maintien et de découplage qui comporte un nombre réduit de pièces et qui peut être assemblé rapidement et facilement.

A cet effet, l'invention propose une bague de maintien et de découplage pour un moteur électrique de ventilateur, incorporé dans un boîtier de ventilation chauffage et/ou climatisation automobile, dans un support moteur du type comportant une paroi délimitant une chambre destinée à loger ledit moteur électrique par l'intermédiaire d'un dispositif de maintien dudit moteur dans ladite chambre et comprenant des moyens de découplage dudit moteur par interposition d'éléments amortisseurs. Selon l'invention elle comporte au moins deux coquilles entourant le moteur et supportant les moyens de découplage.

Selon une forme de réalisation préférentielle, les coquilles sont propres à coopérer entre elles et peuvent, idéalement, être reliées entre elles par une charnière film.

Dans ce mode de réalisation, les moyens de découplage sont disposés radialement et selon des positions angulaires constantes. Ils peuvent être disposés sur le diamètre extérieur et/ou sur le diamètre intérieur et/ou à la fois sur les diamètres intérieur et extérieur de la bague de maintien.

Dans cette dernière configuration, les moyens de découplage sont préférentiellement en vis à vis et sont réalisés de façon monobloc.

Selon une autre caractéristique de l'invention, les coquilles peuvent être en matière plastique et les moyens de découplage sont surmoulés.

Préférentiellement, les moyens de découplage pourront avoir une épaisseur variable suivant la direction radiale et/ou une épaisseur variable suivant la direction axiale et/ou une épaisseur variable suivant les directions radiale et axiale.

Selon encore une autre caractéristique de l'invention, les coquilles peuvent comporter au moins un moyen d'arrêt disposé radialement en partie supérieure et/ou en partie inférieure desdites coquilles propres à positionner axialement ledit moteur électrique. Ce moyen d'arrêt peut être un jeu d'ergots répartis uniformément sur le diamètre intérieur desdites coquilles.

Par ailleurs, au moins une rainure de fixation est agencée sur la paroi de la chambre du support moteur propre à coopérer par complémentarité de forme avec au moins un desdits moyens de découplage. Ainsi les moyens de découplage et les ouvertures de fixation assurent un maintien en position axiale, radiale et angulaire dudit moteur électrique.

De façon particulièrement avantageuse, la paroi de la chambre du support moteur est tronconique.

Ainsi, il est possible grâce à la sélection adéquate des moyens de découplage, des géométries des rainures de fixation et de la paroi de la chambre du support de rattraper l'ensemble des jeux entre au moins l'un des éléments de découplage du moteur et le support qui le loge. Ainsi, la coopération entre la bague de maintien et de découplage et le support moteur permet, d'une part d'absorber les vibrations, et d'autre part, de réaliser un dispositif particulièrement simple à assembler ou à désassembler.

Dans ce mode de réalisation, la bague de maintien et de découplage autorise une meilleure adaptation à la géométrie du moteur et un montage simplifié de l'ensemble moteur - bague de maintien et de découplage dans la chambre du support qui le loge. De plus, grâce aux propriétés élastiques des organes de découplage, il est possible non seulement d'absorber les vibrations axiales, radiales et tangentielles, et leurs combinaisons, mais également d'utiliser des moteurs dont la circonférence présente une variation par rapport à ceux autorisés par les tolérances de fabrication.

L'invention a également pour objet un procédé d'assemblage d'une bague de maintien et de découplage pour un moteur électrique comportant les étapes suivantes :
- positionnement radial des au moins deux coquilles sur le moteur électrique permettant la mise en position des moyens de découplage afin de constituer un ensemble .
- emmanchement jusqu'à la position finale dudit ensemble dans le support moteur par engagement desdits moyens de découplage dans les rainures de fixation de la paroi de la chambre dudit support moteur suite à un mouvement d'expansion radial desdits moyens de découplage dans lesdites rainures pour une fixation axiale, radiale et angulaire dudit ensemble.

Dans la description qui suit, faite à titre d'exemple, on se réfère aux dessins annexés, sur lesquels :
- La figure 1 est une vue schématique d'une coquille constituant une des parties de la bague de maintien et de découplage selon le premier mode de réalisation;
- La figure 2 illustre la bague de maintien et de découplage constituée de deux coquilles en vue de coté suivant la coupe AA de la figure 3;
- La figure 3 a est vue de dessus de la bague de maintien et de découplage suivant la coupe BB de la figure 2;

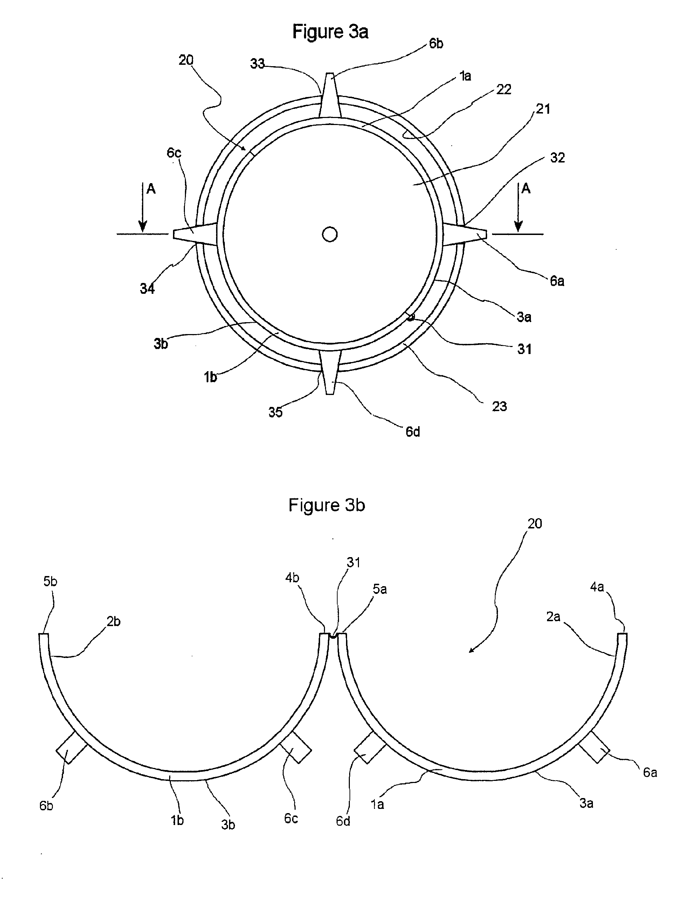

- La figure 3 b est vue en développé de la bague de maintien et de découplage illustrant la liaison entre les deux coquilles par charnière film;

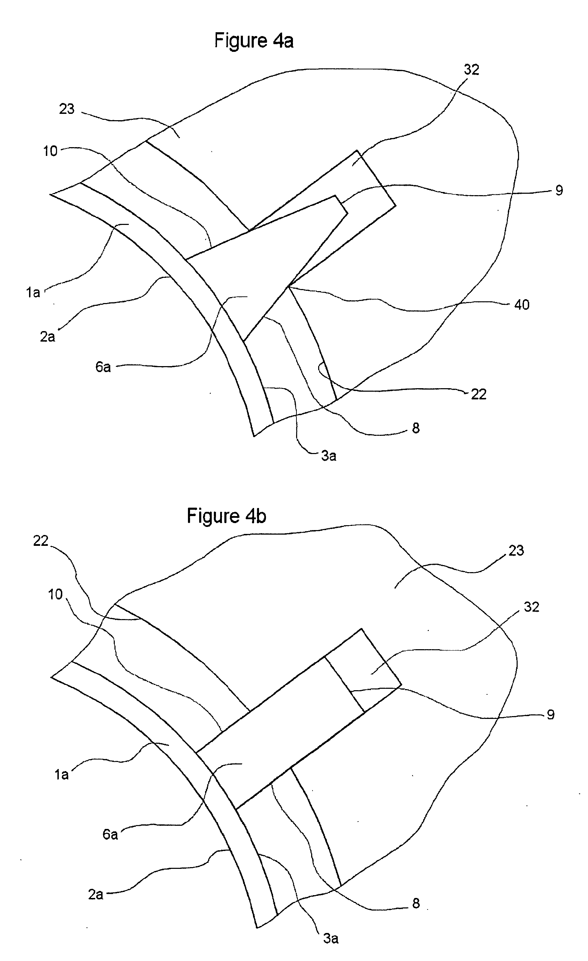

- Les figures 4a et 4b sont des vues partielles des éléments de maintien et de découplage respectivement à section progressive et à section constante selon la direction radiale;

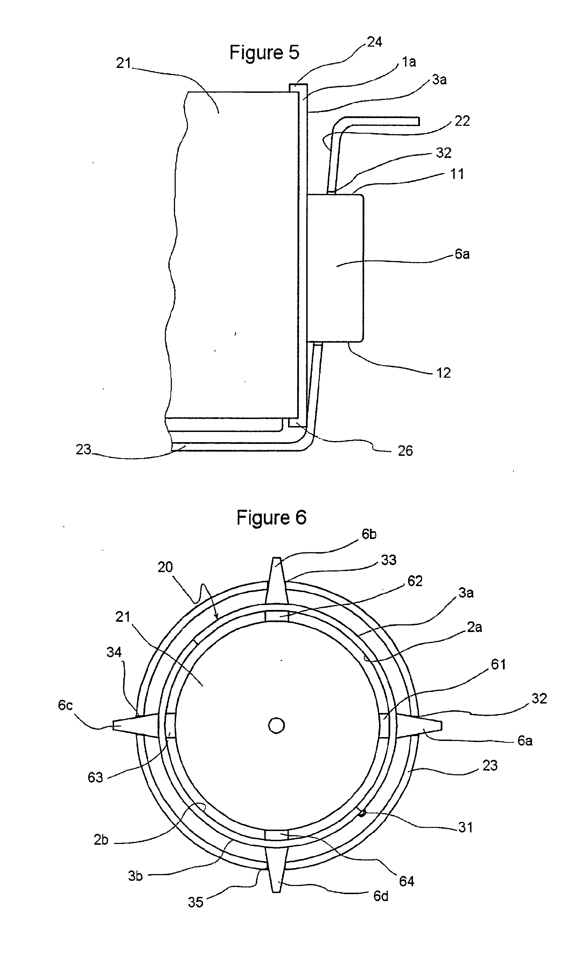

- La figure 5 est une vue partielle de la bague de maintien et de découplage à section constante selon la direction axiale;
- La figure 6 illustre un autre mode de réalisation selon lequel d'autres éléments de découplage viennent s'interfacer entre le moteur et la bague de maintien et de découplage;

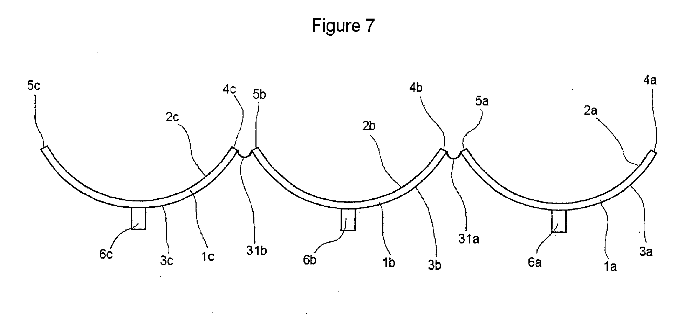

- La figure 7 est vue en développé de la bague de maintien et de découplage présentant une alternative de réalisation avec trois coquilles et illustrant la liaison entre ces dernières par charnière film.

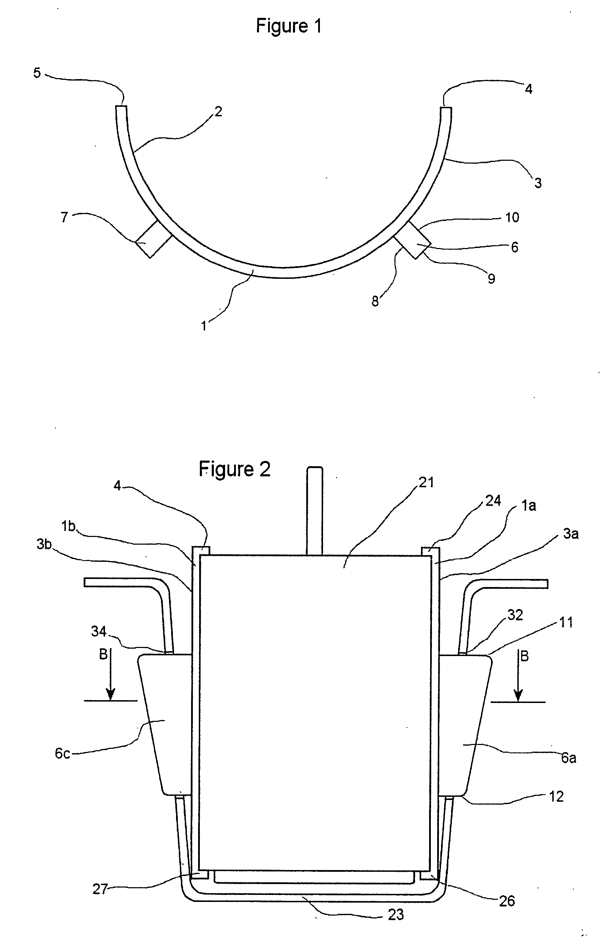

La bague de maintien et de découplage illustrée à la figure 1 représente une coquille (1) faisant partie intégrante de la bague de maintien et de découplage. La coquille (1), par exemple en matière plastique, comprend une face intérieure (2), une face extérieure (3) et deux extrémités (4, 5). L'une au moins des surfaces (2, 3) comprend en outre au moins un élément de découplage (6, 7) de forme ici sensiblement parallélépipédique. Cet élément de découplage présente au moins une face utile (8 - 12).

En figures 2 et 3a est représenté un dispositif de découplage et de maintien faisant intervenir deux coquilles (1a , 1b) et quatre éléments de découplage (6a - 6d). Par l'intermédiaire des deux coquilles (1a , 1b), la bague de maintien et de découplage (20) enserre le moteur (21). Pour se faire, les deux faces internes (2a , 2b) des deux coquilles (1a , 1b) viennent en contact direct avec la surface périphérique du moteur. Les deux coquilles sont pourvues, respectivement, de deux éléments amortisseurs (6a , 6b et 6c, 6d) disposés sur les faces extérieures (3a , 3b), idéalement surmoulés. Ces éléments amortisseurs ont au moins une de leurs faces utiles (8 - 12) venant coopérer avec la paroi interne (22) du support moteur (23). Cet assemblage vient assurer le maintien et le découplage du moteur (21) par rapport à son support (23) par l'intermédiaire des éléments de découplage (6a - 6d).

La paroi interne (22) du support moteur comporte un nombre de rainures de fixation (32 - 35) correspondant au nombre d'éléments de découplage (6a - 6d). Par complémentarité de forme, les éléments de découplage (6a - 6d) viennent se loger après emmanchement jusqu'à la position finale de l'ensemble constitué du moteur (21) et de la bague de maintien et de découplage (20) dans le support moteur (23). En position finale, les éléments de découplage (6a - 6d) se sont expansés dans lesdites rainures de fixation (32 - 35) après avoir été comprimés lors de la première phase d'assemblage.

Dans la configuration présentée en figures 2 et 3a, les deux coquilles (1a, 1b) constituant la bague de maintien et de découplage (20) coopèrent entre elles par la mise en relation de leurs extrémités (4a , 4b , 5a , 5b). Ainsi, le dispositif enserre le moteur (21) sur la totalité de sa périphérie. Selon le mode préférentiel de réalisation, un organe de liaison (31) , par exemple une charnière film, relie les deux coquilles (1a , 1b) afin d'assurer une parfaite mise en place de la bague de maintien et de découplage (20) et sa parfaite coopération avec la moteur.

Selon une autre forme de réalisation, les deux coquilles, telles que représentées à la figure 3a, sont indépendantes l'un de l'autre. Ainsi, la bague de maintien et de découplage est constituée de deux coquilles séparées s'appuyant sur la surface périphérique de moteur. Les deux coquilles (1a, 1b) ne coopèrent plus. En effet, les extrémités (4, 5) des coquilles (1a, 1b) ne sont plus jointives. Ainsi, au moins un espace persiste entre les extrémités desdites coquilles. Cet espace résiduel permet une plus grande liberté de montage.

D'après la figure 2, les éléments de maintien et de découplage assurent la mise en position radiale de l'ensemble constitué par le moteur, la bague et le support moteur. Pour réaliser un maintien dans la direction axiale, chaque coquille (1a , 1b) comporte en partie supérieure et/ou en partie inférieure des moyens d'arrêt (24 - 27) venant chevaucher la face supérieure et/ou inférieure du moteur. Idéalement, ces moyens d'arrêt (24 - 27) peuvent être des ergots saillant des faces internes (2a , 2b) des coquilles (1a , 1b). Ces ergots sont disposés radialement et angulairement dispersés.

Une autre forme de réalisation de ces moyens d'arrêt consiste à réaliser au moins deux demi-couronnes disposées perpendiculairement à l'extrémité supérieure et/ou inférieure des deux coquilles (1a, 1b) et chevauchant la face supérieure et/ou inférieure du moteur.

Comme illustré en figure 2, le support moteur (23) comporte une chambre dont la paroi intérieure (22) est de forme tronconique. Cette forme permet une meilleure montabilité et une coopération accrue entre le support moteur (23) et l'ensemble constitué du moteur (21) et de la bague de maintien et de découplage (20).

L'exemple présenté comme mode de réalisation préférentiel comporte quatre éléments de découplage (6a - 6d). La géométrie desdits éléments de découplage (6a -6d) permet une meilleure coopération entre le support moteur (23) et la bague de maintien et de découplage (20) ainsi qu'il va être vu ci-dessous. Pour faciliter l'insertion de l'ensemble constitué du moteur (21) et de la bague de maintien et de découplage (20), les éléments de découplage (6a - 6d) ont une épaisseur variable suivant la direction axiale et/ou radiale.

Une variation selon la direction axiale est présentée en figure 2. Ainsi réalisée, la paroi extérieure (9) des éléments de découplage (6a - 6d) est inclinée par rapport à la verticale. La phase d'insertion de l'ensemble constitué du moteur (21) et de la bague de découplage (20) est facilitée. Les éléments de découplage (6a - 6d) se compriment progressivement suivant la profondeur d'insertion. En complément de la géométrie tronconique de la paroi interne (22) du support moteur (23), le montage par emmanchement jusqu'à la position finale est facilitée.

L'exemple selon le mode de réalisation présenté en figure 3a comprend des éléments de découplage (6a - 6d) dont les épaisseurs sont variables selon la direction radiale. Les parois extérieures (8, 10) des éléments de découplage (6a - 6d) sont inclinées par rapport à la direction radiale. La forme résultante des éléments de découplage (6a - 6d) se rapproche de celle d'une pyramide tronquée à base rectangulaire, en vue de coupe. Cette forme particulière permet une coopération sur une surface réduite de contact (40) entre les rainures de fixation (32 - 35) et les éléments de découplage (6a -6d). Cette disposition assure une mise et un maintien en position améliorés. Les mouvements de translation radiaux sont mutuellement compensés par les surfaces réduites de contact (40). Dans cette configuration, toute rotation de l'ensemble constitué du moteur (21) et de la bague de maintien et de découplage est rendue impossible.

En effet, grâce à ces géométries particulières et une fois en position finale de montage, aucune translation selon la direction radiale n'est rendue possible. De plus, ce mode de réalisation permet d'obtenir un centrage amélioré de l'ensemble constitué du moteur (21) et de la bague de maintien et de découplage (20) par rapport au support moteur (23). Dans une telle réalisation, le maintien et la mise en position de l'ensemble constitué du moteur (21) et de la bague de maintien et de découplage (20) sont optimum car aucun degré de liberté n'est autorisé.

La figure 3b illustre une vue de la bague de maintien et de découplage (20) en développé. Cette configuration présente la liaison (31) entre les deux coquilles (1a , 1b). La bague de maintien et de découplage présente deux coquilles (1a , 1b) faisant partie intégrante de la bague de maintien et de découplage (20). Les coquilles (1a , 1b) comprennent respectivement une face intérieure (2a , 2b), une face extérieure (3a , 3b) et deux extrémités (4a , 4b , 5a , 5b). Les deux surfaces (3a , 3b) comprennent en outre au moins deux éléments de découplage (6a - 6d), disposés respectivement sur chacune des deux surfaces (3a , 3b), de forme ici sensiblement parallélépipédique. L'ensemble constitue une bague de maintien et de découplage (20) comportant deux coquilles (1a, 1b) reliées entre elles par un élément de liaison (31). En figure 3b, cet élément de liaison (31) est constitué par une charnière film.

En figure 4a est présentée une vue détaillée du mode de réalisation vu en figure 3a. L'élément de découplage (6a) vient en contact avec la rainure de fixation (32) par l'intermédiaire d'au moins une de ses surfaces utiles (8 - 12). La forme 'pyramidale tronquée', précédemment définie, permet une surface de contact (40) réduite entre la rainure de fixation (32) et au moins une de ses surfaces utiles (8 - 12). Cette disposition géométrique permet le rattrapage des jeux dimensionnels et ainsi de s'affranchir de tolérances géométriques trop exigeantes.

La figure 4b présente une autre forme de réalisation des éléments de découplage (6a - 6d). Ce dernier conserve une forme généralement d'un parallélépipède, en vue de coupe. Cette forme particulière permet une coopération entre les surfaces internes de la rainure de fixation (32) et les faces utiles (8,10) de l'élément de découplage (6a - 6d). Cette réalisation autorise une plus grande souplesse dans le montage de par les degrés de liberté laissés libres.

En mode de réalisation préférentielle, les éléments de découplage (6a - 6d) ont une forme présentant une variation dimensionnelle selon les directions axiales et radiales. Ainsi, il est possible de combiner les avantages liés aux différentes formes de réalisation précédemment décrites.

Comme montré à la figure 5, afin d'obtenir des éléments de découplage (6a - 6d) plus simples de réalisation, la paroi extérieure (9) est parallèle à la face extérieure (3a , 3b) de la coquille (1a, 1b). Dans cette forme de réalisation, la conicité de la paroi intérieure (22) du support moteur (23) permet à elle seule l'insertion de l'ensemble constitué du moteur (21) et de la bague de maintien et de découplage (20) dans ledit support moteur (23).

Une autre forme de réalisation permet d'utiliser les éléments de découplage (6a - 6d , 61 - 64) en simple contact avec les divers éléments supportés, par exemple un moteur électrique (21), et/ou supportant, par exemple un support moteur (23). Ainsi, les éléments de découplage (6a - 6d , 61 - 64) viennent s'appuyer sur la surface périphérique du moteur et/ou de la paroi du support moteur.

Il est possible d'assurer cette fonction de maintien et de découplage en employant une alternative comme présenté en figure 6. A l'inverse de l'exemple précédemment décrit, le mode de réalisation illustré comporte deux coquilles (1a, 1b) entourant le moteur (21). Les éléments de découplage (61 - 64) sont situés sur les faces intérieures (2a , 2b). Ainsi, les éléments de découplage viennent en contact direct avec la surface cylindrique du moteur (15) et les faces extérieures (3a, 3b) des deux coquilles sont pourvues, respectivement, de deux éléments amortisseurs (6a - 6d) disposés sur les faces extérieures (3a , 3b), idéalement surmoulés. Ces éléments amortisseurs ont au moins une de leurs faces utiles (8 - 12) venant coopérer avec la paroi interne (22) du support moteur (23). Cet assemblage vient assurer le maintien et le découplage du moteur (21) par rapport à son support (23) par l'intermédiaire des éléments de découplage (6a - 6d).

Ce dernier mode de réalisation a pour avantage de permettre une plus grande liberté dans les tolérances géométriques de montage. En effet, grâce au caractère élastique des éléments de découplage (6a - 6d), il est possible d'employer des moteurs (21) dont le diamètre extérieur est légèrement supérieur à celui idéalement défini.

La bague de maintien et de découplage (20) comporte deux séries d'éléments de découplage (6a - 6d , 61 - 64). Chacun de ces éléments de découplage est disposé pour partie sur la face intérieure (2a , 2b) et pour partie sur la face extérieure (3a , 3b) des coquilles (1.1, 1.2).

Deux configurations incluant les avantages de la réalisation précédentes sont possibles. Selon l'un desdites configurations, les éléments de découplage (61 - 64) situés sur les faces intérieures (2a, 2b) sont positionnés en phase avec les éléments de découplage (6a - 6d) disposés sur les faces extérieures (3a, 3b). Une telle disposition est présentée en figure 6. Dans ce mode de réalisation privilégié, l'opération de surmoulage des éléments de découplages (6a - 6d , 61- 64) peut être effectuée simultanément.

Dans ces modes de réalisation, il est à la fois possible de réaliser un maintien et un découplage performant combiné avec une adaptation améliorée au diamètre du moteur.

Le nombre de coquilles intervenant dans le dispositif de maintien et de découplage n'est pas limités à deux. Ainsi la bague de maintien et de découplage réalise la même fonction avec par exemple trois coquilles.

Chacune d'entre elles comporte au moins un élément de découplage. Les configurations précédentes faisant coopérer ou non deux coquilles entre elles sont réalisables également avec un nombre supérieur de coquilles.

La bague de maintien et de découplage représentée à la figure 7 représente trois coquilles (1a , 1b , 1c) faisant partie intégrante de la bague de maintien et de découplage (20). La bague de maintien et de découplage présente trois coquilles (1a , 1b , 1c) faisant partie intégrante de la bague de maintien et de découplage (20). Les coquilles (1a , 1b , 1c) comprennent respectivement une face intérieure (2a , 2b , 2c), une face extérieure (3a , 3b , 3c) et deux extrémités (4a , 4b , 4c , 5a , 5b , 5c). Les trois surfaces (3a , 3b , 3c) comprennent en outre au moins trois éléments de découplage (6a - 6c), disposés respectivement sur chacune des trois surfaces (3a , 3b , 3c), de forme ici sensiblement parallélépipédique. L'ensemble constitue une bague de maintien et de découplage (20) comportant trois coquilles (1a , 1b, 1c) reliées entre elles par deux éléments de liaison (31a , 31b). En figure 7, ces éléments de liaison (31a , 31b) sont constitués par deux charnières film.

## Revendications

1. Bague de maintien et de découplage (20) pour un moteur électrique (21) de ventilateur, incorporé dans un boîtier de ventilation chauffage et/ou climatisation automobile, dans un support moteur (23) du type comportant une paroi délimitant une chambre destinée à loger ledit moteur électrique par l'intermédiaire d'un dispositif de maintien dudit moteur dans ladite chambre et comprenant des moyens de découplage vibratoire et/ou acoustique dudit moteur par interposition d'éléments amortisseurs
**caractérisée en ce qu'**elle comporte au moins deux coquilles (1a , 1b) entourant le moteur (21) et supportant les moyens de découplage (6a-6d, 61-64).

2. Bague de maintien et de découplage pour un moteur électrique selon la revendication 1, **caractérisée en ce que** les coquilles (1a, 1b) sont propres à coopérer entre elles.

3. Bague de maintien et de découplage pour un moteur électrique selon l'une des revendications précédentes, **caractérisée en ce que** les coquilles sont reliées entre elles par une charnière film (31).

4. Bague de maintien et de découplage pour un moteur électrique selon la revendication 1, **caractérisée en ce que** lesdits moyens de découplage (6a-6d, 61-64) sont disposés radialement.

5. Bague de maintien et de découplage pour un moteur électrique selon la revendication 4, **caractérisée en ce que** lesdits moyens de découplage (6a-6d, 61-64) sont régulièrement espacés selon des positions angulaires constantes.

6. Bague de maintien et de découplage pour un moteur selon l'une des revendications de 1 à 5, **caractérisée en ce que** lesdits moyens de découplage (6a-6d) sont disposés sur le diamètre extérieur (3a , 3b) desdites coquilles (1a, 1b).

7. Bague de maintien et de découplage pour un moteur selon l'une des revendications de 1 à 5, **caractérisée en ce que** lesdits moyens de découplage comportent des deuxièmes moyens de découplage (61-64) sur le diamètre intérieur (2a , 2b) desdites coquilles (1a , 1b).

8. Bague de maintien et de découplage pour un moteur selon la revendication 7, **caractérisée en ce que** lesdits moyens de découplage comportent des premiers et des deuxièmes moyens de découplage sur les diamètres intérieur (2a , 2b) et extérieur (3a , 3b) desdites coquilles (1a , 1b) en vis à vis et réalisés de façon monobloc.

9. Bague de maintien et de découplage pour un moteur électrique selon l'une des revendications précédentes, **caractérisée en ce que** les coquilles (1a, 1b) sont en matière plastique.

10. Bague de maintien et de découplage pour un moteur électrique selon l'une au moins des revendications précédentes, **caractérisée en ce que** lesdits moyens de découplage (6a-6d, 61-64) sont surmoulés.

11. Bague de maintien et de découplage pour un moteur électrique selon l'une au moins des revendications précédentes, **caractérisée en ce que** lesdits moyens de découplage (6a-6d, 61-64) ont une épaisseur variable suivant la direction radiale.

12. Bague de maintien et de découplage pour un moteur électrique selon l'une au moins des revendications précédentes, caractérisée en ce lesdits moyens de découplage (6a-6d, 61-64) ont une épaisseur variable suivant la direction axiale.

13. Bague de maintien et de découplage pour un moteur électrique selon l'une au moins des revendications précédentes, **caractérisée en ce que** lesdits moyens de découplage (6a-6d, 61-64) ont une épaisseur variable suivant les directions radiale et/ou axiale.

14. Bague de maintien et de découplage pour un moteur électrique selon la revendication 13, **caractérisée en ce que** le moyen d'arrêt (24 - 27) est un jeu d'ergots répartis uniformément sur le diamètre intérieur desdites coquilles (1a , 1b).

15. Bague de maintien et de découplage pour un moteur électrique selon l'une des revendications 1 à 14, **caractérisée en ce que** au moins une rainure de fixation (32 - 35) est agencée sur la paroi (22) de la chambre du support moteur de façon à coopérer par complémentarité de forme avec au moins un desdits moyens de découplage (6a - 6d).

16. Bague de maintien et de découplage pour un moteur électrique selon la revendication 15, **caractérisée en ce que** les moyens de découplage (6a - 6d) et les rainures de fixation (32 - 35) assurent un maintien en position axiale, radiale et angulaire dudit moteur électrique.

17. Bague de maintien et de découplage pour un moteur électrique selon l'une des revendications précédentes, **caractérisée en ce que** la paroi (22) de la chambre du support moteur est tronconique.

18. Procédé d'assemblage d'une bague de maintien et de découplage pour un moteur électrique, selon l'une des revendications précédentes, **caractérisé en ce qu'**on réalise les étapes suivantes :
- positionnement radial des au moins deux coquilles (1a, 1b) sur le moteur électrique (21) permettant la mise en position des moyens de découplage (6a - 6b, 61- 64) afin de constituer un ensemble .
- emmanchement jusqu'à la position finale dudit ensemble dans le support moteur (23) par engagement desdits moyens de découplage (6a - 6b) dans les rainures de fixation (32 - 35) de la paroi (22) de la chambre dudit support moteur suite à un mouvement d'expansion radial desdits moyens de découplage dans lesdites rainures pour une fixation axiale, radiale et angulaire dudit ensemble.
